# EUROPEAN PATENT SPECIFICATION

(11) **EP 4 238 684 B1**
(45) Date of publication and mention of the grant of the patent: **09.04.2025**
(21) Application number: 23159061.3
(22) Date of filing: 28.02.2023
(51) Int. Cl.: B23K 26/06, B23K 26/082, B23K 26/22, B23K 26/32, H02K 15/00, B23K 101/38, B23K 103/12

(54) **WELDING METHOD AND LASER DEVICE**
SCHWEISSVERFAHREN UND LASERVORRICHTUNG
PROCÉDÉ DE SOUDAGE ET DISPOSITIF LASER

(30) Priority: 03.03.2022 JP 2022032378
(43) Date of publication of application: 06.09.2023
(73) Proprietor: Kataoka Corporation, Kyoto-shi, Kyoto 601-8203 (JP)
(72) Inventor: YAMAMURA, Takeshi, Kyoto, 601-8203 (JP); NAGASAKI, Katsutoshi, Kyoto, 601-8203 (JP); HAYASHI, Keisuke, Kyoto, 601-8203 (JP)
(74) Representative: Seemann & Partner Patentanwälte mbB

(56) References cited:
- DE-A1- 102019 203 350
- US-A1- 2022 048 137
- US-B2- 11 097 375

## Description

### TECHNICAL FIELD

The present disclosure relates to a welding method and a laser device for performing metal welding using laser light.

### BACKGROUND

As one of techniques for metal welding, laser welding using laser light is used. As compared with other welding techniques, laser welding allows a workpiece to be welded by a condensing lens with highly compacted energy, and is suitable for fine welding with high welding quality.

In recent years, laser welding has been used to manufacture a stator for a motor to be incorporated into a hybrid vehicle or an electric vehicle. The stator includes a stator core and a plurality of segment coils mounted in slots of the stator core, and end portions of the corresponding segment coils are joined to each other by laser welding. Usually, each segment coil is not a round wire but a flat conductor wire. Accordingly, it is possible to eliminate a gap formed by a round wire and increase a density of the joint portion, thereby implementing low fuel consumption and miniaturization. Since a welding surface is as fine as several millimeters square meters, laser welding is suitable.

JP 2021-093832 A discloses a laser welding technique for a stator coil. Here, corresponding flat conductors are arranged with a gap therebetween, and end surfaces are laser-melted. At this time, a melted and solidified portion in which the melted flat conductors are solidified enters below the end surfaces so as to dent the end surfaces. That is, it is considered that in the welding method in the related art, a fact that the molten pool expands onto a convex lens and the molten pool becomes deep is one factor of spattering, and in order to prevent this in this technique, the molten flat conductor during welding sequentially flows into the gap, whereby a molten pool at an irradiation point irradiated with the laser light is formed shallowly (see paragraph [0045] of JP 2021-093832 A).

In addition, DE 10 2019 203 350 A1 discloses a hairpin welding method which welds wire ends of at least two copper wires, arranged flush next to one another, to one another by a laser beam.

Moreover, US 11,097,375 B2 D2) discloses a laser processing apparatus which includes a continuous-wave laser oscillator for generating a continuous-wave laser beam, a condenser lens for concentrating a continuous-wave laser beam onto a workpiece.

Furthermore, US 2022/0048137 A1 (D3) refers to a method for laser welding a pair of metal pins, which delivers a laser beam to a work-side of the pair of metal pins where a respective pair of surfaces of the metal pins are adjacent to each other and face in the same direction. The laser beam first traces a first path on the work-side to form a melt pool by keyhole welding.

### SUMMARY

According to the above technique, spattering generated during welding can be prevented to keep the welding quality constant. Although it is desired to improve the productivity in the manufacturing process of the stator, there is no finding in the above literature about productivity improvement, such as shortening the processing time.

Therefore, an object of the present invention is to provide a welding method and a laser device capable of reducing processing time while maintaining good welding quality in a welding method of performing metal welding by laser welding.

The object is solved by a welding method according to claim 1 and by a laser device according to claim 15. The present invention provides a welding method of abutting end portions of a first member and a second member that are arranged facing a laser device against each other and welding the end portions by laser light, wherein an end surface where the first member and the second member are abutted against each other is rotationally irradiated with the laser light at a predetermined rotating diameter, wherein a spot diameter of the laser light is equal to or larger than the rotating diameter, and wherein an irradiation region of the laser light by the rotational irradiation extends over the first member and the second member.

According to the present invention since the spot diameter of the laser light is equal to or larger than the rotating diameter, the central portion of the welding surface is normally irradiated with the laser light. Therefore, it is possible to supply sufficient energy to the central portion of the welding surface, and the welding surface starts melting from the central portion and gradually melts toward the end portion due to thermal conduction. In this way, it is possible to form a clean molten ball without applying excessive heat to the end portions of the welding surface and preventing molten metal from melting from the end portions of the welding surface due to melting from the central portion. By rotational irradiation with the laser light, the concentration of heat is prevented, and a flow in the rotating direction is generated inside the molten pool, thereby further stabilizing the molten pool. As a result, it is possible to prevent generation of spattering and implement high welding quality.

Since the related-art patent literature JP 2021-093832 A does not have a configuration in which the central portion of the welding surface is normally irradiated with laser light, the welding method according to the present invention starts melting at the central portion earlier than the method described in the related-art patent literature JP 2021-093832 A. Accordingly, the formation of the molten pool is further promoted, and the workpiece to be welded can be quickly melted.

### BRIEF DESCRIPTION OF DRAWINGS

Fig. 1 is a schematic diagram showing an overall configuration of a laser device 100 according to a first embodiment of the present invention;
Fig. 2 is a view showing a configuration of a galvano scanner 8;
Fig. 3A is a perspective view showing a schematic configuration of a stator; Fig. 3B is a diagram showing a segment coil 52; Fig. 3C is a view showing a workpiece W;
Fig. 4A and 4B are diagrams showing a welding method according to the first embodiment;
Fig. 5 is a schematic diagram showing an overall configuration of a laser device 1 according to a second embodiment of the present invention;
Fig. 6A and 6B are diagrams showing an example (case of r ≤ d1) of a welding method according to the second embodiment;
Fig. 7A and 7B are diagrams showing an example (case of r > d1) of the welding method according to the second embodiment;
Fig. 8 is a photograph of the machined workpiece W; and
Fig. 9A and 9B are views showing welding of segment coils.

### DESCRIPTION OF EMBODIMENTS

A welding method according to an aspect of the present invention is a welding method of abutting end portions of a first member and a second member that are arranged facing a laser device against each other and welding the end portions by laser light, in which an end surface where the first member and the second member are abutted against each other is rotationally irradiated with the laser light at a predetermined rotating diameter, in which a spot diameter of the laser light is equal to or larger than the rotating diameter, and an irradiation region of the laser light by the rotational irradiation extends over the first member and the second member.

In a welding method according to another aspect of the present embodiment, a wavelength of the laser light is 300 nm to 600 nm.

In the welding method according to another aspect of the present embodiment, the end surface is rectangular, and r≤d1<a when a length of a short side of a rectangle forming the end surface is defined as "a", a spot diameter of the laser light is defined as "d1", and the rotating diameter is defined as "r".

In the welding method according to another aspect of the present embodiment, a spot area (condensing area) of the laser light is 1% to 30% of a total area of the end surface.

In the welding method according to another aspect of the present embodiment, an output power of the laser light is 500 W to 2 kW.

In the welding method according to another aspect of the present embodiment, energy intensity distribution of the laser light on the end surface is highest at a substantially central portion of the irradiation region, is weak at a region other than the substantially central portion of the irradiation region, and is zero outside the irradiation region.

In the welding method according to another aspect of the present embodiment, the end surface is rotationally irradiated with second laser light having a wavelength different from that of the laser light, and a spot diameter of the second laser light is smaller than the spot diameter of the laser light.

In the welding method according to another aspect of the present embodiment, an optical axis of the laser light coincides with an optical axis of the second laser light.

In the welding method according to another aspect of the present embodiment, a wavelength of the second laser light is 780 nm to 1,100 nm.

In the welding method according to another aspect of the present embodiment, the spot diameter of the second laser light is less than 1/10 of the spot diameter of the laser light.

In the welding method according to another aspect of the present embodiment, the spot diameter of the second laser light is 10 µm to 100 µm.

In the welding method according to another aspect of the present embodiment, the laser light and the second laser light are rotated at a rotating speed of 100 mm/s to 1,000 mm/s.

In the welding method according to another aspect of the present embodiment, irradiation time with the laser light and the second laser light is 50 msec or longer.

In the welding method according to another aspect of the present embodiment, each of the first member and the second member is a flat conductor having a rectangular cross section constituting a stator coil, and a molten ball is formed on the end surface by abutting end portions of two flat conductors arranged facing the laser device against each other and welding the end portions with the laser light and the second laser light.

In the welding method according to another aspect of the present embodiment, simultaneously with or before irradiation with the laser light and the second laser light, nitrogen is blown onto the end surface at a flow rate of 5 L/min to 100 L/min and at an inclination angle of 0° to 90° with respect to the end surface until and even after the radiation ends.

A welding method according to an aspect of the present invention is a welding method of abutting end portions of a first member and a second member that are arranged facing a laser device against each other and welding the end portions by laser light, in which the laser light includes first laser light and second laser light having different wavelengths, an end surface is irradiated with the first laser light and the second laser light in an annular shape by rotationally irradiating a substantial center of the end surface with the laser light at a predetermined rotating diameter, and a spot diameter of the second laser light is smaller than a spot diameter of the laser light.

A laser device according to an aspect of the present invention is a laser device according to claim 15.

According to a further aspect of the present invention the laser device may include a second oscillator configured to oscillate second laser light having a wavelength different from that of the first laser light; a combiner configured to superimpose the first laser light and the second laser light on the same optical axis; and a galvano scanner configured to rotationally irradiate a substantial center of the end surface with the first laser light and the second laser light at a predetermined rotating diameter, in which a spot diameter of the first laser light is equal to or larger than the rotating diameter, and a spot diameter of the second laser light is smaller than the spot diameter of the first laser light.

The laser device may include one or more galvano scanners configured to rotationally irradiate a substantial center of the end surface with the first laser light and the second laser light at a predetermined rotating diameter, wherein the end surface is irradiated with the first laser light and the second laser light in an annular shape, and a spot diameter of the second laser light is smaller than a spot diameter of the first laser light.

Here, a laser device 100 according to a first embodiment of the present invention will be described. The laser device 100 is a device that performs butt welding on a workpiece formed of a material having a high thermal conductivity, and performs thermal conduction welding by irradiation with a laser such that energy distribution of the laser on a welding surface having a rectangular shape is highest at a central portion and is zero at a peripheral edge.

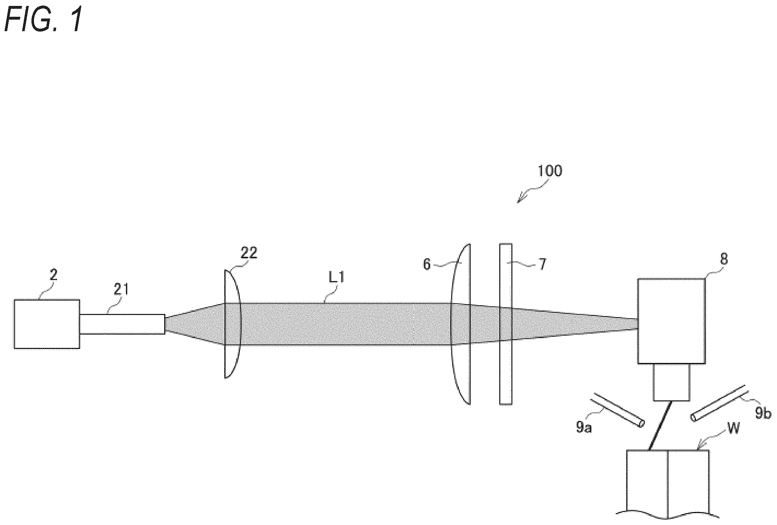

Fig. 1 is a diagram showing a schematic configuration of the laser device 100. As shown in the figure, the laser device 100 includes a first oscillator 2 that oscillates first laser light L1, a transmission fiber 21 which is an optical fiber that transmits the first laser light L1, a collimating lens 22 that converts the first laser light L1 into parallel light, a condensing lens 6 that reduces a spot diameter of the first laser light L1, a protective glass 7 that protects the condensing lens 6, a galvano scanner 8 that two-dimensionally displaces an irradiation position of the first laser light L1 with respect to the workpiece W, and shield nozzles 9a and 9b that supply a shielding gas to the workpiece W. The laser device 100 may include other optical systems, optical fibers, and the like in addition to the above components.

In the present embodiment, a blue semi-conductor laser coupled to a multimode fiber is used as the first laser light L1. The first laser light L1 may have a wavelength of 300 nm to 600 nm, and a green laser may be used instead of the blue laser. An output power of the first laser light L1 is preferably 500 W to 2 kW.

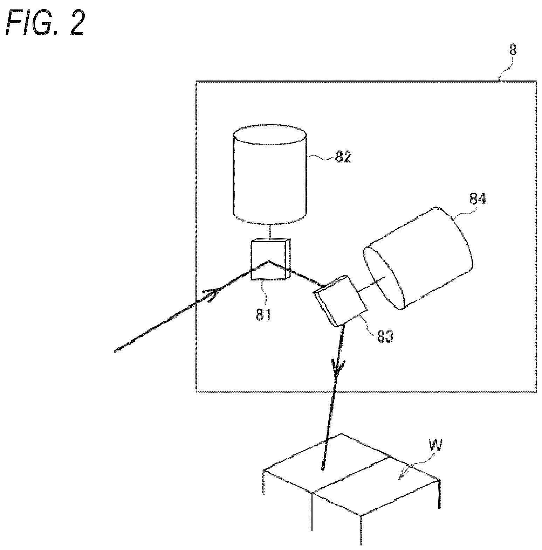

Next, the galvano scanner 8 will be described. Fig. 2 is a diagram schematically showing a configuration of the galvano scanner 8. As shown in the figure, the galvano scanner 8 includes an X-axis galvano mirror 81, an X-axis galvano motor 82 for rotating the X-axis galvano mirror 81, a Y-axis galvano mirror 83, and a Y-axis galvano motor 84 for rotating the Y-axis galvano mirror 83. That is, the galvano scanner 8 has a function of deflecting the first laser light L1 in any two-dimensional direction. A stepping motor, a servo motor, or the like can be used as the X-axis galvano motor 42 and the Y-axis galvano motor 44.

The galvano scanner 8 is connected to a control unit (not shown) and drives the motors 82 and 84 based on a control command transmitted from the control unit to two-dimensionally control the irradiation position of the first laser light L1 on the workpiece W. More specifically, the first laser light L1 is controlled to rotate on a two-dimensional plane of the workpiece W.

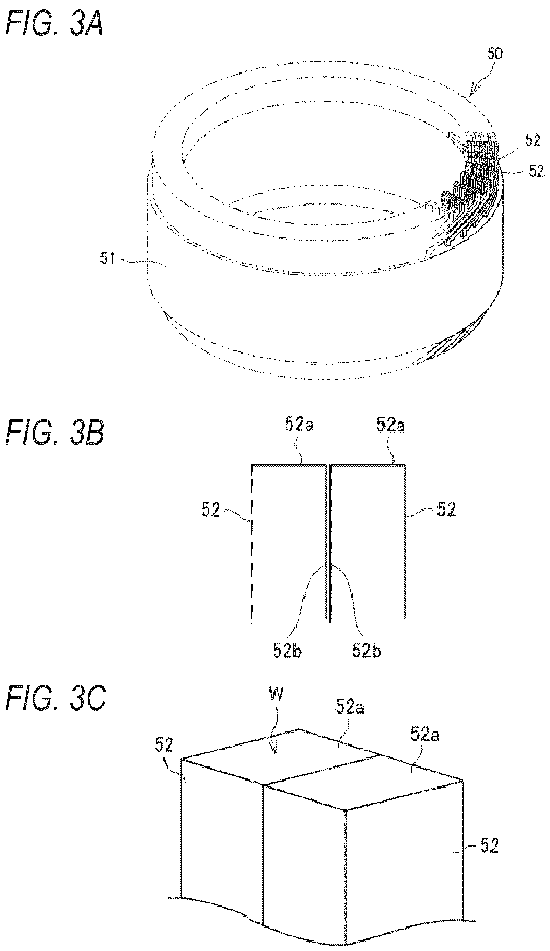

The workpiece W to be welded will be described with reference to Figs. 3A to 3C . Fig. 3A is a perspective view showing a schematic configuration of a stator 50 which is a stator of a motor of an electric vehicle or the like. As shown in the figure, the stator 50 includes a substantially cylindrical stator core 51 and a plurality of segment coils 52. Each of the segment coils 52 is an electric wire having a rectangular cross section, that is, a flat conductor. The segment coil 52 is usually made of pure copper, but may be made of a metal material having a high conductivity, such as an alloy containing copper as a main component or an alloy containing copper and aluminum. An end portion of the segment coil 52 protrudes from an upper end portion of the stator core 51, and the laser device 100 performs laser welding on end portions of two segment coils (flat conductors) 52 adjacent to each other in a radial direction of the stator core 51.

First, as shown in Fig. 3B, abutting surfaces 52b of the segment coils (flat conductors) 52 from which an insulating coating is peeled are abutted against each other. At this time, the segment coils 52 may be abutted against each other using a jig (not shown). As shown in Fig. 3C, end surfaces 52a of the two abutted segment coils 52 serve as welding surfaces, that is, the workpiece W according to the present embodiment. Here, a gap of the welding surfaces may cause poor welding. In order to prevent poor welding, it is preferable that the end surfaces 52a of the two segment coils 52 are abutted against each other so as to be flush with each other. The laser device 100 rotationally irradiates, with the first laser light L1, the end surfaces 52a against which two adjacent segment coils 52 abut to weld the two adjacent segment coils 52.

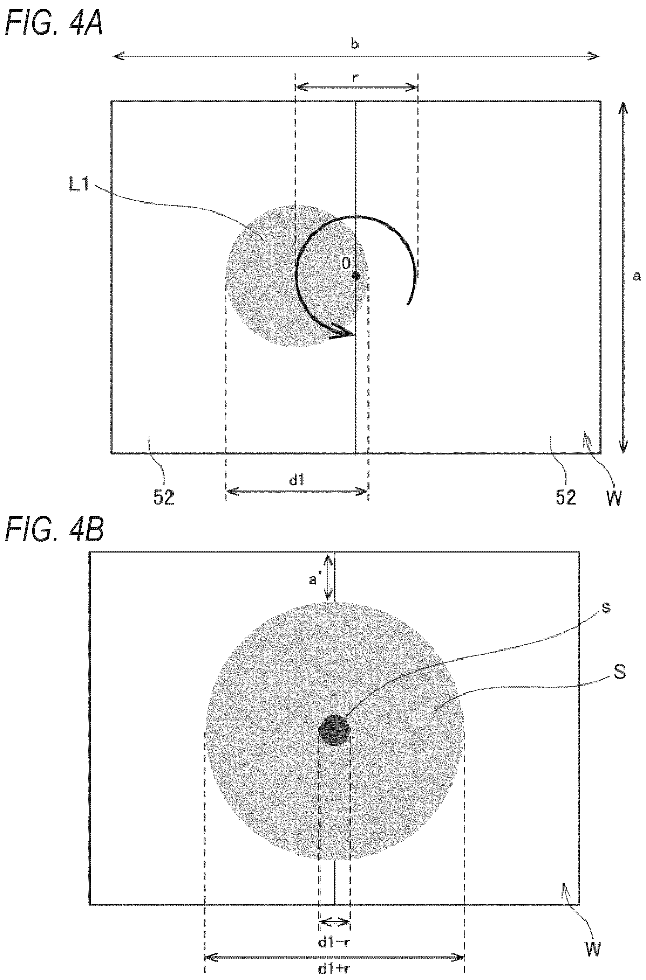

Next, a welding method with the laser device 100 will be described in detail with reference to Figs. 4A and 4B.

Fig. 4A is a diagram schematically showing an irradiation region of the first laser light L1 on the workpiece W in a state where the galvano scanner 8 is stopped. As described above, the workpiece W has a rectangular shape in which the end portions of the two segment coils 52 abut against each other, and a size thereof is any size. In a case of a segment coil of a normal stator, 2.5 mm ≤ a ≤ 4.0 mm and about 3.0 mm ≤ b ≤ 5.0 mm when a length of a short side is defined as "a" and a length of a long side is defined as "b". Thus, a total area (a × b) of the workpiece W is about 7.5 mm² ≤ (a × b) ≤ 20.0 mm². In the present embodiment, as an example, a = 2.8 mm and b = 3.2 mm.

As shown in Fig. 4A, the first laser light L1 is rotated with a rotating diameter "r" with respect to a center O of the workpiece W as indicated by an arrow, in which the spot diameter of the first laser light L1 is defined as "d1". At this time, r ≤ d1 < a. Preferably, r < d1 < a.

The spot diameter d1 may be determined such that a spot area (gray region in Fig. 4A) of the first laser light L1 becomes 1% to 30% of the total area of the workpiece W. Here, as an example, the rotating diameter r is 800 µm, and the spot diameter "d1" is 1,050 µm.

When the first laser light L1 is rotated from this state, as shown in Fig. 4B, an irradiation region S (light gray region in Fig. 4B) of the first laser light L1 becomes circular, and the diameter becomes "d1 + r". Here, in order to form a clean molten ball on the workpiece W, it is desirable that a distance "a'" from an outer periphery of the irradiation region S of the first laser light L1 to an edge portion of the workpiece W is at least 0.2 mm or longer. If the distance "a'" from the outer periphery of the irradiation region S to the edge portion of the workpiece W is too short, spattering may occur or molten metal may melt and flow.

As shown in Fig. 4B, a circular region "s" (dark gray region in Fig. 4B) having a diameter "d1 - r" in the central portion of the workpiece W is always irradiated with the first laser light L1. That is, the energy distribution of the first laser light L1 is the highest in the circular region "s" which is the central portion of the workpiece W, is lower and constant in the other regions than the central portion, and is zero since the outside of the irradiation region S is not irradiated with the first laser light L1.

The laser device 100 rotates the first laser light L1 at a rotating speed of 500 mm/s. The irradiation time with the first laser light L1 is 50 msec or longer.

In this way, since the central portion of the workpiece W is normally irradiated with the first laser light L1 in the laser device 100, the central portion of the workpiece W can be irradiated with the first laser light L1 at a sufficient energy density. Therefore, melting starting at the central portion is fast, and the workpiece W is gradually melted from the central portion toward the end portion due to thermal conduction. Here, although the workpiece W is made of copper having a very high thermal conductivity, since the edge portion of the workpiece W has no heat escape area in the periphery thereof, the molten metal is melt and flows when excessive heat is applied to the edge portion of the workpiece W and a clean molten ball cannot be formed. Therefore, in the laser device 100 according to the present embodiment, the edge portion of the workpiece W is not irradiated with laser light, and the workpiece W is gradually molten from the central portion toward the end portion, thereby forming a clean molten ball.

By rotational irradiation with the first laser light L1, it is possible to supply necessary energy to the workpiece W without using a laser light source having a large spot diameter and a large output.

In the laser device 100, nitrogen, which is a shielding gas, is blown to the welding surface at 5 L/min to 100 L/min simultaneously with or before irradiation with the first laser light L1 until and even after the irradiation ends. More preferably, blowing is performed at 10 L/min to 40 L/min. As shown in Fig. 1, in the present embodiment, nitrogen is blown from the left and right using the two shield nozzles 9a and 9b. An angle of each of the shield nozzles 9a and 9b with respect to the workpiece W is, for example, 30 degrees. A diameter of a tip opening of each of the shield nozzles 9a and 9b (nozzle tip diameter) is preferably about 1 mm to 10 mm. A working distance, which is a distance from the tip opening of each of the shield nozzles 9a and 9b to the workpiece W, is preferably about 5 mm to 15 mm.

By supplying nitrogen to the workpiece W via the shield nozzles 9a and 9b, the laser device 100 performs welding on the workpiece W in a nitrogen atmosphere. Oxidation of the welding surface is prevented by the shielding gas, and accordingly, a decrease in welding strength and generation of porosity caused by oxidation of the welding surface can be prevented. Further, by suitably selecting conditions such as the flow rate of the shielding gas, the nozzle tip diameter, and the working distance, it is possible to prevent the swing of the molten ball and form a clean molten ball. In particular, by blowing nitrogen from the left and right, a laterally symmetric clear molten ball is formed. Accordingly, the welding quality is improved.

Next, a second embodiment of the present invention will be described. The second embodiment is a welding method in which the welding process can be performed at a higher speed by irradiation with second laser light L2 in addition to the first laser light L1.

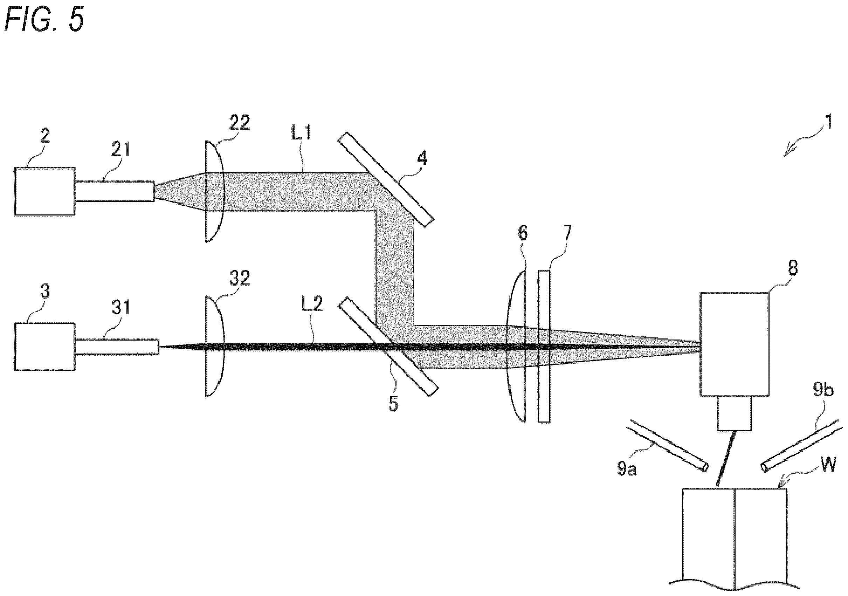

Fig. 5 is a diagram showing a schematic configuration of a laser device 1 according to the second embodiment. As shown in the figure, the laser device 1 includes the first oscillator 2 that oscillates the first laser light L1, a second oscillator 3 that oscillates the second laser light L2, the transmission fiber 21 which is an optical fiber that transmits the first laser light L1, a transmission fiber 31 which is an optical fiber that transmits the second laser light L2, the collimating lens 22 that converts the first laser light L1 into parallel light, a collimating lens 32 that converts the second laser light L2 into parallel light, mirrors 4 and 5 that make optical axes of the first laser light L1 and the second laser light L2 coincide with each other, the condensing lens 6 that reduces a spot diameter of each of the first laser light L1 and the second laser light L2, a protective glass 7 that protects the condensing lens 6, the galvano scanner 8 that displaces irradiation positions of the first laser light L1 and the second laser light L2 with respect to the workpiece W, and the shield nozzles 9a and 9b that supply a shielding gas to the workpiece W.

The laser device 1 may further include other optical systems, optical fibers, and the like in addition to these components.

The first laser light L1 and the second laser light L2 oscillated from the first oscillator 2 and the second oscillator 3 are parallelized by the collimating lenses 22 and 32, respectively. The first laser light L1 and the second laser light L2 that pass through the collimating lenses 22 and 32, respectively, are superimposed on the mirror 4 and the mirror 5, respectively, such that optical axes thereof coincide with each other. Thereafter, the optical axis is changed toward the condensing lens 6, and a diameter of the optical axis is reduced to a predetermined diameter by the condensing lens 6. Then, at the galvano scanner 8, the workpiece W opposed thereto is rotationally irradiated. The mirror 5 is a dichroic mirror that reflects a wavelength of the first laser light L1 and transmits a wavelength of the second laser light L2. In this way, the laser device 1 performs welding by irradiating the workpiece W with the two laser light L1 and L2.

The first laser light L1 is basically the same as that of the first embodiment. That is, an output power of the first laser light L1 is preferably 500 W to 2 kW, and is 600 W as an example in the present embodiment. An output power of the second laser light L2 is preferably 500 W to 2 kW, and is 900 W as an example in the present embodiment.

The wavelength of the first laser light L1 is 300 nm to 600 nm, and the wavelength of the second laser light L2 is 780 nm to 1,100 nm. That is, the first laser light L1 and the second laser light L2 have different wavelengths, and the wavelength of the first laser light L1 is shorter than the wavelength of the second laser light L2. Although as the beam mode, either a multimode or a single mode can be used, in the present embodiment, the first laser light L1 uses the multimode and the second laser light L2 uses the single mode. As will be described later, the second laser light L2 is spot light having a smaller spot diameter than the first laser light L1. Therefore, by using a single-mode fiber laser as the second oscillator 3, it is possible to effectively generate the second laser light L2 having a small beam diameter and a high energy intensity.

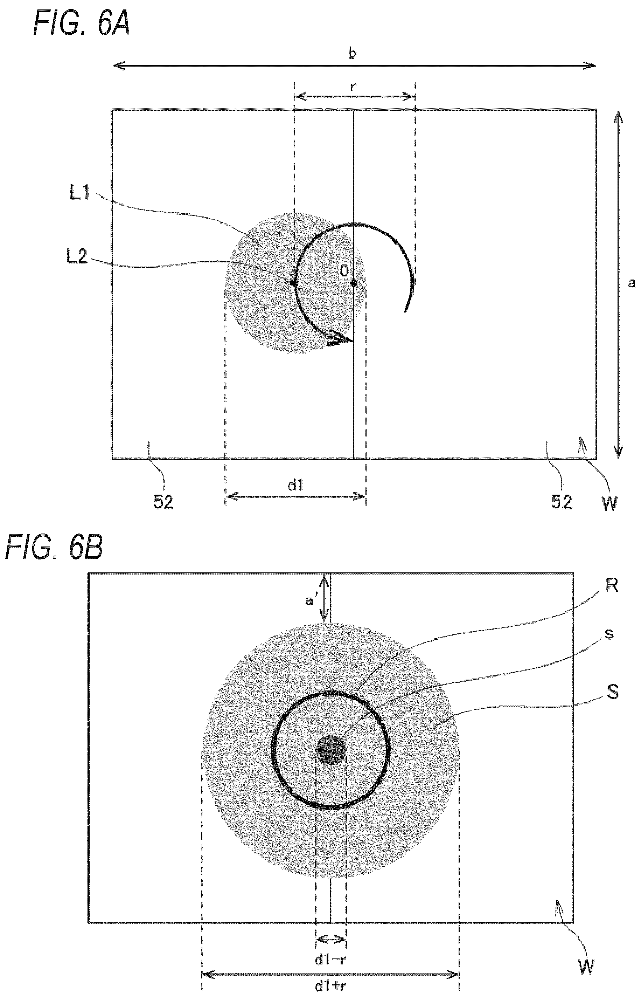

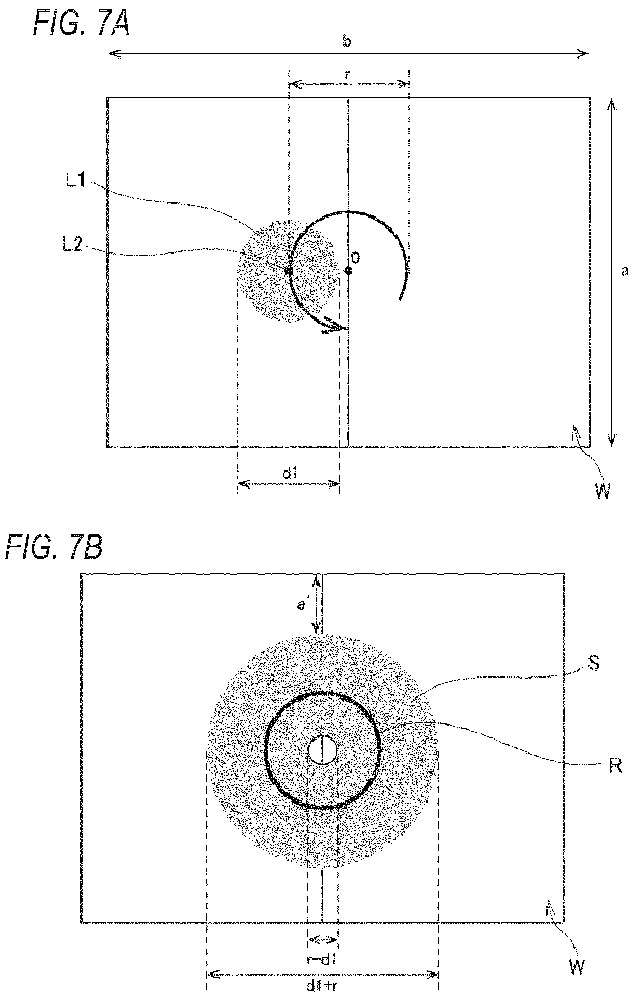

Next, the welding method by the laser device 1 will be described in detail with reference to Figs. 6 and 7. In the first embodiment described above, the spot diameter d1 of the first laser light L1 satisfies r ≤ d1 < a, the spot diameter "d1" is larger than the rotating diameter "r", and the center of the workpiece W is normally irradiated with the first laser light L1. On the other hand, in the second embodiment, the spot diameter d1 of the first laser light L1 may be larger, smaller, or the same size as the rotating diameter "r".

Fig. 6A and 6B show an example of a welding method in a case where the spot diameter "d1" of the first laser light L1 satisfies r ≤ d1 as in the first embodiment. Fig. 7A and 7B show an example of a welding method in a case where the spot diameter "d1" of the first laser light L1 satisfies r > d1.

First, an example of r ≤ d1 will be described. Fig. 6A is a diagram schematically showing irradiation regions of the first laser light L1 and the second laser light L2 on the workpiece W in a state where the galvano scanner 8 is stopped. The workpiece W is as described in the first embodiment, and in the present embodiment, the size of the workpiece W is, for example, a = 2.8 mm and b = 3.2 mm.

As shown in Fig. 6A, the first laser light L1 and the second laser light L2 are circular beams having the same optical axis and the spot diameters "d1" and "d2", respectively. The first laser light L1 and the second laser light L2 are rotated with the rotating diameter r with respect to the center O of the workpiece W as indicated by an arrow. Here, as an example, the spot diameter "d1" of the first laser light L1 is 1,050 µm, and the rotating diameter r is 800 µm. The spot diameter d2 of the second laser light L2 is smaller than the spot diameter "d1" of the first laser light L1, and for example, "d2" is equal to or less than 1/10 of "d1". Here, "d2" is 40 µm as an example.

Similarly to the first embodiment, the spot diameter "d1" may be determined such that a spot area (gray region in Fig. 6A) of the first laser light L1 becomes 1% to 30% of a total area of the workpiece W.

When the first laser light L1 and the second laser light L2 are rotated from this state, as shown in Fig. 6B, the irradiation region S (light gray region in Fig. 6B) of the first laser light L1 becomes circular, and the diameter thereof becomes "d1 + r". In order to form a clean molten ball on the workpiece W, it is desirable that the distance "a'" from an outer periphery of the irradiation region S of the first laser light L1 to an edge portion of the workpiece W is at least 0.2 mm or longer. If the distance "a'" from the outer periphery of the irradiation region S to the edge portion of the workpiece W is too short, spattering may occur or molten metal may melt and flow.

As shown in Fig. 6B, the circular region "s" (dark gray region in Fig. 6B) having the diameter "d1 - r" in a central portion of the workpiece W is always irradiated with the first laser light L1. That is, energy distribution of the first laser light L1 is the highest in the circular region "s" which is the central portion of the workpiece W, is lower and constant in regions other than the central portion, and is zero since the outside of the irradiation region S is not irradiated with the first laser light L1.

In the second embodiment, the irradiation with the second laser light L2 is added, whereby the irradiation region R of the second laser light L2 has an annular shape as shown in Fig. 6B. Here, the workpiece W is additionally irradiated with the second laser light L2 so as to supply energy, that is, heat necessary for melting, and is not intended to form a keyhole in the workpiece W. Therefore, the laser device 1 according to the present embodiment may form a keyhole by irradiation with the second laser light L2 or may not form a keyhole.

In this way, in the case of "r ≤ d1", since the central portion of the workpiece W is normally irradiated with the first laser light L1, the central portion of the workpiece W can be irradiated with the first laser light L1 at a sufficient energy density. Therefore, the heat is most accumulated in the central portion, the temperature rises most at a joint surface of the two segment coils 52, and a deep molten pool is formed at the abutting surface 52b. Due to thermal conduction, the workpiece W is gradually melted toward the end portion thereof. That is, the laser device 1 according to the present embodiment performs thermal conduction welding similarly to the laser device 100 according to the first embodiment.

The laser device 1 further irradiates the workpiece W with the second laser light L2 in a state where the thermal absorption rate is increased by irradiation with the first laser light L1. Accordingly, the melting of the workpiece is accelerated, and the speed of the welding process can be increased.

Next, an example of "r > d1" will be described. Fig. 7A is a diagram schematically showing the irradiation regions of the first laser light L1 and the second laser light L2 on the workpiece W in a state where the galvano scanner 8 is stopped. When the first laser light L1 and the second laser light L2 are rotated from this state, as shown in Fig. 7B, the central portion of the workpiece W is not irradiated with the first laser light L1, and the irradiation region S of the first laser light L1 (gray region in Fig. 7B) becomes annular. An outer diameter of the irradiation region S is "d1 + r", and an inner diameter is "r - d1". It is desirable that the distance "a'" from the outer periphery of the irradiation region S to the edge portion of the workpiece W is at least 0.2 mm. The irradiation region R of the second laser light L2 has an annular shape as shown in Fig. 7B.

In this way, even in the case where the central portion of the workpiece W is not irradiated with the first laser light L1, by adding the irradiation with the second laser light L2, melting starts from the portion irradiated with the second laser light L2 immediately after the start of the irradiation, but heat propagates to the central portion of the workpiece W, and the energy is most accumulated in the central portion. Therefore, the temperature most rises at the joint surface of the two segment coils 52, and a deep molten pool is formed at the abutting surface 52b. Further, the melting of the workpiece is accelerated by the irradiation with the second laser light L2, and the speed of the welding process can be increased. Since the edge portion of the workpiece W is not irradiated with the laser light, the workpiece W is gradually melted from the central portion toward the end portion of the workpiece W, and a clean molten ball can be formed.

The laser device 1 rotates the first laser light L1 and the second laser light L2 at a rotating speed of 500 mm/s. The irradiation time with the first laser light L1 and the second laser light L2 is 50 msec or longer. Similarly to the first embodiment, the laser device 1 performs welding on the workpiece W in a nitrogen atmosphere while supplying nitrogen to the workpiece W via the shield nozzles 9a and 9b. The flow rate of the shielding gas and the conditions of the nozzle are the same as those in the first embodiment.

The laser device 100 forms a molten pool on the workpiece W by rotationally irradiating the first laser light L1 having a wavelength of 300 nm to 600 nm and a high optical absorptance with respect to copper. The laser device 100 does not irradiate a center of an irradiation surface with strong energy and does not irradiate a peripheral portion of the irradiation surface with laser light. By irradiation with the first laser light L1 with such an energy distribution, it is possible to form a clean molten ball on a workpiece having high thermal conductivity.

When irradiation at a fixed point is temporarily performed without rotationally irradiation with the first laser light L1, a high-output blue laser light source is required, but a high-output blue laser source is still hard to come by and expensive. Further, in a case of irradiation with the first laser light L1 at a fixed point, a large amount of spattering may be generated.

The laser device 1 forms a molten pool on the workpiece W by rotationally irradiating the workpiece W with the first laser light L1 having a wavelength of 300 nm to 600 nm and a high optical absorptance with respect to copper. Then, the second laser light L2 having a small spot diameter and a high energy density is irradiated while being rotated at a high speed in the molten pool to be formed, whereby a locally deep penetration depth in the molten pool is implemented and the formation of the molten pool is promoted.

The laser device 1 and the laser device 100 use the first laser light L1 having a larger spot diameter for welding than a welding device in the related art. The laser device 1 and the laser device 100 can further apply heat to the workpiece W to melt the workpiece W by rotational irradiation with the first laser light L1.

Further, the laser device 1 and the laser device 100 generate a flow in the molten pool by rotational irradiation with the first laser light L1 and the second laser light L2 instead of irradiation at a fixed point. Air bubbles generated from the molten pool that reaches a high temperature are discharged to the outside. Accordingly, the porosity can be reduced. Further, it is possible to prevent heat from being locally concentrated in the molten pool, stabilize the molten pool, and reduce spattering. Since porosity and spattering cause welding defects such as defective joining, the laser device 1, the laser device 100, and the welding method using these devices can prevent the occurrence of welding defects.

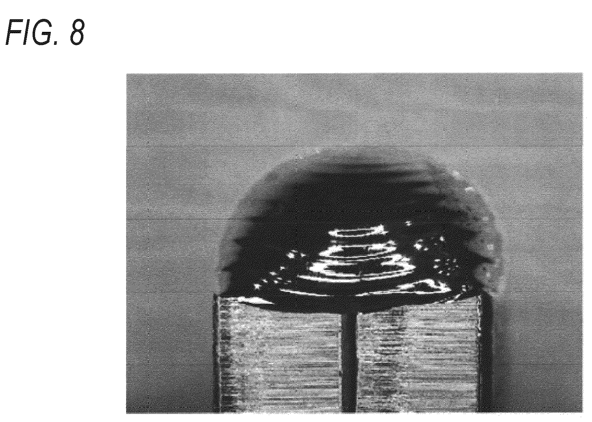

Fig. 8 shows a result of welding the segment coils 52 of the stator 50 using the laser device 1 according to the second embodiment. As shown in the figure, it can be seen that a glossy and laterally symmetric clean molten ball is formed.

Further, since in the laser device 1 and the laser device 100, the optical axis of each laser light can be two-dimensionally displaced by the galvano scanner 8, the processing time required for welding the segment coils for the stator in each stage can be shortened as compared with a laser device that does not include the galvano scanner 8.

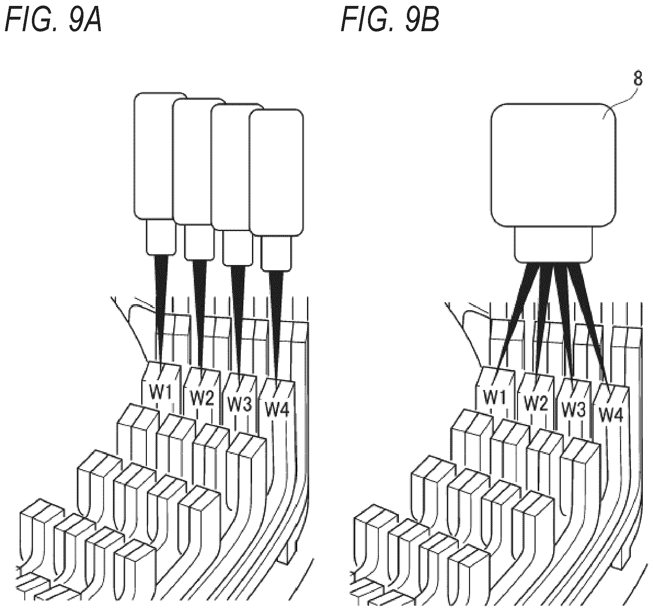

In a case where the welding of the segment coils is performed by the laser device which does not include a galvano scanner, as shown in Fig. 9A, irradiation positions with the laser light L1 and L2 are first aligned with a workpiece W1, followed by laser irradiation. Next, in order to weld a workpiece W2, the laser device 1 is conveyed by a conveying mechanism (not shown) so that an irradiation nozzle faces the workpiece W2, and irradiation positions of the laser light L1 and L2 are aligned with the workpiece W2, followed by laser irradiation. Similarly, regarding workpieces W3 and W4, it is necessary to repeatedly perform conveyance, positioning, and laser irradiation of the laser device.

On the other hand, when the laser device 1 and the laser device 100 including the galvano scanner 8 are used, as shown in Fig. 9B, the irradiation positions of the laser light L1 and L2 with respect to the workpiece W1 are aligned by the galvano scanner 8, followed by laser irradiation. Next, in order to weld the workpiece W2, the irradiation positions of the laser light L1 and L2 with respect to the workpiece W2 are aligned by the galvano scanner 8, followed by laser irradiation. That is, in the laser device 1 and the laser device 100, the conveyance of the laser device is not necessary by using the galvano scanner 8. Similarly, regarding the workpiece W3 and the workpiece W4, it is not necessary to convey the laser device each time the workpiece is welded, and positioning and laser irradiation can be repeatedly performed.

In this way, in the laser device 1 and the laser device 100, the time required for conveying the laser device is not required, and the processing time can be shortened.

Although the laser device 1 and the laser device 100 have been described above as embodiments of the present invention, the present invention is not limited to the laser device 1, the laser device 100, and the welding method using the laser device 1 and the laser device 100 described above, and the above embodiments can be modified as follows.

Here, a modification of the above embodiments will be described. The above embodiments and the modification described below can be combined in any way.
(1) In the second embodiment, the laser device 1 superimposes the laser light L1 and L2 having different wavelengths. Here, a refractive index of the light depends on the wavelength of the light, and when a plurality of laser light having different wavelengths are superimposed and pass through a lens or the like, the irradiation position of the first laser light L1 and the irradiation position of the second laser light L2 may be shifted on the workpiece W. In order to prevent this, the laser device 1 may include an fθ lens, or a 3D galvano scanner may be used instead of the galvano scanner 8. Further, other optical systems, optical fibers, and the like may be provided.
(2) In the first embodiment and the second embodiment, the spot diameter "d1" of the first laser light L1 is not limited to 1,050 µm. As described above, the spot diameter d1 can be selected such that the area (spot area, condensing area) of the irradiation region with the first laser light L1 becomes 1% to 30% of the total area of the workpiece W.
   Further, in the second embodiment, the spot diameter "d2" of the second laser light L2 is not limited to 40 µm. The spot diameter d2 of the second laser light L2 can be about 10 µm to 100 µm, and is preferably 1/10 or less of the spot diameter "d1" of the first laser light L1.
   The spot diameter of each laser light depends on a core diameter of the transmission fiber, a focal length of the collimating lens, and a focal length of the condensing lens, and can be calculated by the following equation: spot diameter = core diameter of transmission fiber × (focal length of condensing lens / focal length of collimating lens). Therefore, by adjusting these optical systems, it is possible to change the spot diameter of each laser light.
(3) In the first embodiment and the second embodiment, the rotating speed of the first laser light L1 and the second laser light L2 is 500 mm/s, but the rotating speed of the first laser light L1 and the second laser light L2 is not limited thereto, and may be within a range of 100 mm/s to 1,000 mm/s.
(4) In the second embodiment, the first laser light L1 is the multimode and the second laser light L2 is the single mode, but this is an example, and the beam mode of each laser light is not limited.
(5) In the first embodiment and the second embodiment, the shield nozzles 9a and 9b of a side nozzle type are used to avoid interference with an operation of the galvano scanner 8 and to effectively supply nitrogen, but it is needless to say that the shield nozzle is not limited to a shield nozzle of a side nozzle type. The shield nozzle may be any nozzle as long as it can blow nitrogen to the welding surface at an inclination angle of 0° to 90° and weld the welding surface in a nitrogen atmosphere.
(6) In the first embodiment and the second embodiment, the first laser light L1 and the second laser light L2 are focused on the workpiece W (welding surface), but in the present disclosure, the first laser light L1 and the second laser light L2 may be focused at positions within a range of ±2 mm from the welding surface in a vertical direction.
(7) In the first embodiment and the second embodiment, the first laser light L1 and the second laser light L2 are circular beams, but the beam shapes of the first laser light and the second laser light are not limited thereto. For example, an elliptical beam or a rectangular beam may be used. In this case, a longitudinal direction of a rectangular welding surface is preferably a major axis.
(8) In the first embodiment and the second embodiment, the stator coil is described as an example of the workpiece. However, the welding method, the laser device 1, and the laser device 100 are not limited to a case of being used for welding the stator coil.
(9) In the second embodiment, the optical axis of the first laser light L1 and the optical axis of the second laser light L2 are made to coincide with each other, and rotational irradiation is performed by the galvano scanner 8. However, the present disclosure is not limited thereto, and the optical axis of the first laser light L1 and the optical axis of the second laser light L2 may not coincide with each other, and the first laser light L1 and the second laser light L2 may be rotated by separate laser scanning optical systems (galvano scanners). That is, the present disclosure also includes a configuration in which the laser device 100 includes two galvano scanners, one galvano scanner rotates the first laser light L1, and the other galvano scanner rotates the second laser light L2.

## Claims

1. A welding method of welding end portions of a first member and a second member with first laser light (L1) irradiated by a laser device (100), the welding method comprising:
arranging the end portions of the first member (52) and the second member (52) next to each other facing an end surface of the end portions of the first member (52) and the second member (52) faces towards the laser device (100);
performing rotational irradiation to the end surface of the end portions of the first member (52) and the second member (52) with the first laser light (L1) at a predetermined rotating diameter,
**characterized in that**
a spot diameter of the first laser light (L1) is set to be equal to or larger than the rotating diameter, and
**in that**
an irradiation region of the first laser light (L1) by the rotational irradiation is set to extend over the first member (52) and the second member (52).

2. The welding method according to claim 1,
wherein a wavelength of the first laser light (L1) is set to be in a range from 300 nm to 600 nm.

3. The welding method according to claim 2,
wherein the end surface is rectangular, and
wherein a length of a short side of a rectangle forming the end surface is defined as "a", a spot diameter of the laser light is defined as "d1", and the rotating diameter is defined as "r", the rotational irradiation is performed while satisfying r ≤ d1 < a.

4. The welding method according to claim 3,
wherein a spot area of the laser light is set to be in a range from 1% to 30% of a total area of the end surface.

5. The welding method according to claim 4,
wherein an output power of the first laser light (L1) is set to be in a range from 500 W to 2 kW.

6. The welding method according to any one of claims 1 to 5,
wherein energy intensity distribution of the first laser light (L1) on the end surface is highest at a central portion of the irradiation region and is zero outside the irradiation region.

7. The welding method according to claim 1 further comprising
performing rotational irradiation to the end surface of the end portions of the first member (52) and the second member (52) with second laser light (L2) having a wavelength different from that of the first laser light (L1) while performing the rotational irradiation of the first laser light (L1),
wherein a spot diameter of the second laser light (L2) is set to be smaller than the spot diameter of the first laser light (L1).

8. The welding method according to claim 7,
wherein an optical axis of the first laser light (L1) coincides with an optical axis of the second laser light (L2).

9. The welding method according to claim 8,
wherein a wavelength of the second laser light (L2) is set to be in a range from 780 nm to 1,100 nm.

10. The welding method according to claim 9,
wherein the spot diameter of the second laser light (L2) is less than 1/10 of the spot diameter of the first laser light
or wherein the spot diameter of the second laser light (L2) is set to be in a range from 10 µm to 100 µm.

11. The welding method according to any one of claims 7 to 10,
wherein the first laser light (L1) and the second laser light (L2) are rotated at a rotating speed that is set to be in a range from 100 mm/s to 1,000 mm/s.

12. The welding method according to any one of claims 7 to 11,
wherein irradiation time with the first laser light (L1) and the second laser light (L2) is set to be 50 msec or longer.

13. The welding method according to any one of claims 1 to 12,
wherein each of the first member (52) and the second member (52) is a flat conductor having a rectangular cross section constituting a stator coil, and
wherein a molten ball is formed on the end surface by welding the first member (52) and the second member (52).

14. The welding method according to any one of claims 7 to 13, further comprising:
blowing nitrogen onto the end surface of the first member (52) and the second member (52) at a flow rate in a range from 5 L/min to 100 L/min and at an inclination angle in a range from 0° to 90° with respect to the end surface,
wherein the blowing of the nitrogen is started simultaneously with start of performing the rotational irradiation of the first laser light (L1) and the second laser light (L2) or is started before the start of performing the rotational irradiation, and is ended when the rotational irradiation is ended or after the rotational irradiation is ended.

15. A laser device (100) for welding end portions of a first member (52) and a second member (52) being arranged next to each other, the laser device (100) comprising:
an oscillator (2) configured to oscillate laser light (L1);
a galvano scanner (8) including:
an X-axis galvano mirror (81);
an X-axis galvano motor (82) configured to rotate the X-axis galvano mirror (81);
a Y-axis galvano mirror (83);
a Y-axis galvano motor (84) configured to rotate the Y-axis galvano mirror (83),
wherein the galvano scanner (8) deflects the laser light (L1) in any two- dimensional direction;
**characterized in that** the laser device comprises
a control unit configured to transmit a control command to the X-axis galvano motor (82) and the Y-axis galvano motor (84) to perform rotational irradiation of the laser light (L1) to a center portion of an end surface of the end portions of the first member (52) and the second member (52) at a predetermined rotating diameterthat extends over the first member (52) and the second member (52), the rotating diameter being set to be equal to or smaller than a spot diameter of the laser light (L1).

## Patentansprüche

1. Schweißverfahren zum Verschweißen von Endabschnitten eines ersten Elements und eines zweiten Elements mit einem Laserlicht (L1), das von einer Laservorrichtung (100) ausgestrahlt wird, wobei das Schweißverfahren umfasst:
Anordnen der Endabschnitte des ersten Elements (52) und des zweiten Elements (52) nebeneinander, wobei eine Endoberfläche der Endabschnitte des ersten Elements (52) und des zweiten Elements (52) der Laservorrichtung (100) zugewandt ist;
Durchführen einer Rotationsbestrahlung auf die Endoberfläche der Endabschnitte des ersten Elements (52) und des zweiten Elements (52) mit dem ersten Laserlicht (L1) bei einem vorbestimmten Rotationsdurchmesser,
**dadurch gekennzeichnet, dass**
ein Punktdurchmesser des ersten Laserlichts (L1) so eingestellt ist, dass er gleich oder größer als der Rotationsdurchmesser ist, und
dadurch, dass
ein Bestrahlungsbereich des ersten Laserlichts (L1) durch die Rotationsbestrahlung so eingestellt ist, dass er sich über das erste Element (52) und das zweite Element (52) erstreckt.

2. Schweißverfahren nach Anspruch 1,
wobei eine Wellenlänge des ersten Laserlichts (L1) so eingestellt ist, dass sie in einem Bereich von 300 nm bis 600 nm liegt.

3. Schweißverfahren nach Anspruch 2,
wobei die Endoberfläche rechteckig ist und
wobei eine Länge einer kurzen Seite eines Rechtecks, welche die Endoberfläche bildet, als "a" definiert ist, ein Punktdurchmesser des Laserlichts als "d1" definiert ist und der Rotationsdurchmesser als "r" definiert ist, wobei die Rotationsbestrahlung unter Erfüllung von r ≤ d1 < a durchgeführt wird.

4. Schweißverfahren nach Anspruch 3,
wobei eine Punktfläche des Laserlichts so eingestellt ist, dass sie in einem Bereich von 1 % bis 30 % einer Gesamtfläche der Endoberfläche liegt.

5. Schweißverfahren nach Anspruch 4,
wobei eine Ausgangsleistung des ersten Laserlichts (L1) so eingestellt ist, dass sie in einem Bereich von 500 W bis 2 kW liegt.

6. Schweißverfahren nach einem der Ansprüche 1 bis 5,
wobei die Energieintensitätsverteilung des ersten Laserlichts (L1) auf der Endoberfläche in einem Mittelabschnitt des Bestrahlungsbereichs am höchsten und außerhalb des Bestrahlungsbereichs gleich null ist.

7. Schweißverfahren nach Anspruch 1, weiter umfassend
Durchführen einer Rotationsbestrahlung auf die Endoberfläche der Endabschnitte des ersten Elements (52) und des zweiten Elements (52) mit einem zweiten Laserlicht (L2), das eine Wellenlänge aufweist, die von jener des ersten Laserlichts (L1) verschieden ist, während die Rotationsbestrahlung des ersten Laserlichts (L1) durchgeführt wird,
wobei ein Punktdurchmesser des zweiten Laserlichts (L2) so eingestellt ist, dass er kleiner als der Punktdurchmesser des ersten Laserlichts (L1) ist.

8. Schweißverfahren nach Anspruch 7,
wobei eine optische Achse des ersten Laserlichts (L1) mit einer optischen Achse des zweiten Laserlichts (L2) zusammenfällt.

9. Schweißverfahren nach Anspruch 8,
wobei eine Wellenlänge des zweiten Laserlichts (L2) so eingestellt ist, dass sie in einem Bereich von 780 nm bis 1.100 nm liegt.

10. Schweißverfahren nach Anspruch 9,
wobei der Punktdurchmesser des zweiten Laserlichts (L2) weniger als 1/10 des Punktdurchmessers des ersten Laserlichts ist,
oder wobei der Punktdurchmesser des zweiten Laserlichts (L2) so eingestellt ist, dass er in einem Bereich von 10 µm bis 100 µm liegt.

11. Schweißverfahren nach einem der Ansprüche 7 bis 10,
wobei das erste Laserlicht (L1) und das zweite Laserlicht (L2) mit einer Rotationsgeschwindigkeit gedreht werden, die so eingestellt ist, dass sie in einem Bereich von 100 mm/s bis 1.000 mm/s liegt.

12. Schweißverfahren nach einem der Ansprüche 7 bis 11,
wobei eine Bestrahlungszeit mit dem ersten Laserlicht (L1) und dem zweiten Laserlicht (L2) so eingestellt ist, dass sie 50 msec oder länger ist.

13. Schweißverfahren nach einem der Ansprüche 1 bis 12,
wobei jedes des ersten Elements (52) und des zweiten Elements (52) ein flacher Leiter ist, der einen rechteckigen Querschnitt aufweist und eine Statorspule bildet, und
wobei eine geschmolzene Kugel auf der Endoberfläche gebildet wird, indem das erste Element (52) und das zweite Element (52) verschweißt werden.

14. Schweißverfahren nach einem der Ansprüche 7 bis 13, weiter umfassend:
Blasen von Stickstoff auf die Endoberfläche des ersten Elements (52) und des zweiten Elements (52) mit einer Durchflussmenge in einem Bereich von 5 l/min bis 100 l/min und in einem Neigungswinkel in einem Bereich von 0° bis 90° in Bezug auf die Endoberfläche,
wobei das Blasen von Stickstoff gleichzeitig mit dem Start des Durchführens der Rotationsbestrahlung des ersten Laserlichts (L1) und des zweiten Laserlichts (L2) gestartet wird oder vor dem Start des Durchführens der Rotationsbestrahlung gestartet wird und beendet wird, wenn die Rotationsbestrahlung beendet wird oder nachdem die Rotationsbestrahlung beendet wurde.

15. Laservorrichtung (100) zum Verschweißen von Endabschnitten eines ersten Elements (52) und eines zweiten Elements (52), die nebeneinander angeordnet sind, wobei die Laservorrichtung (100) umfasst:
einen Oszillator (2), der ausgestaltet ist, Laserlicht (L1) zu oszillieren;
einen Galvanometer-Scanner (8), umfassend:
einen X-Achsen-Galvanometer-Spiegel (81);
einen X-Achsen-Galvanometer-Motor (82), der ausgestaltet ist, den X-Achsen-Galvanometer-Spiegel (81) zu drehen;
einen Y-Achsen-Galvanometer-Spiegel (83);
einen Y-Achsen-Galvanometer-Motor (84), der ausgestaltet ist, den Y-Achsen-Galvanometer-Spiegel (83) zu drehen,
wobei der Galvanometer-Scanner (8) das Laserlicht (L1) in jede beliebige zweidimensionale Richtung ablenkt;
**dadurch gekennzeichnet, dass** die Laservorrichtung eine Steuereinheit umfasst, die ausgestaltet ist, einen Steuerbefehl an den X-Achsen-Galvanometer-Motor (82) und den Y-Achsen-Galvanometer-Motor (84) zu senden, um eine Rotationsbestrahlung des Laserlichts (L1) auf einen Mittelabschnitt einer Endoberfläche der Endabschnitte des ersten Elements (52) und des zweiten Elements (52) mit einem vorbestimmten Rotationsdurchmesser durchzuführen, der sich über das erste Element (52) und das zweite Element (52) erstreckt, wobei der Rotationsdurchmesser so eingestellt ist, dass er gleich oder kleiner als ein Punktdurchmesser des Laserlichts (L1) ist.

## Revendications

1. Un procédé de soudage pour souder des parties d'extrémité d'un premier élément et d'un deuxième élément avec une première lumière laser (L1) irradiée par un dispositif laser (100), le procédé de soudage comprenant:
le fait de disposer les parties d'extrémité du premier élément (52) et du deuxième élément (52) l'une à côté de l'autre en mettant en face une surface d'extrémité des parties d'extrémité du premier élément (52), et le deuxième élément (52) étant en face du dispositif laser (100);
le fait de réaliser une irradiation rotationnelle de la surface d'extrémité des parties d'extrémité du premier élément (52) et du deuxième élément (52) avec la première lumière laser (L1) à un diamètre de rotation prédéterminé,
**caractérisé en ce que**
un diamètre de spot de la première lumière laser (L1) est réglé pour être égal ou supérieur au diamètre de rotation, et
**en ce que**
une zone d'irradiation de la première lumière laser (L1) par l'irradiation rotationnelle est réglée de façon à s'étendre sur le premier élément (52) et le deuxième élément (52).

2. Le procédé de soudage selon la revendication 1,
dans lequel une longueur d'onde de la première lumière laser (L1) est définie de façon à être dans une gamme allant de 300 nm à 600 nm.

3. Le procédé de soudage selon la revendication 2,
dans lequel la surface d'extrémité est rectangulaire, et
dans lequel une longueur d'un côté court d'un rectangle formant la surface d'extrémité est définie comme étant «a», un diamètre de spot de la lumière laser est défini comme étant «d1», et le diamètre de rotation est défini comme étant «r», l'irradiation rotationnelle étant effectuée tout en satisfaisant r ≤ d1 < a.

4. Le procédé de soudage selon la revendication 3,
dans lequel une zone de spot de la lumière laser est définie de façon à être dans une gamme allant de 1 % à 30 % d'une aire totale de la surface d'extrémité.

5. Le procédé de soudage selon la revendication 4,
dans lequel une puissance de sortie de la première lumière laser (L1) est définie de façon à être dans une gamme allant de 500 W à 2 kW.

6. Le procédé de soudage selon l'une quelconque des revendications 1 à 5,
dans lequel la distribution d'intensité énergétique de la première lumière laser (L1) sur la surface d'extrémité est la plus élevée dans une partie centrale de la zone d'irradiation et est nulle en dehors de la zone d'irradiation.

7. Le procédé de soudage selon la revendication 1, comprenant en outre
le fait d'effectuer une irradiation rotationnelle de la surface d'extrémité des parties d'extrémité du premier élément (52) et du deuxième élément (52) avec une deuxième lumière laser (L2) ayant une longueur d'onde différente de celle de la première lumière laser (L1) tout en effectuant l'irradiation rotationnelle de la première lumière laser (L1),
un diamètre de spot de la deuxième lumière laser (L2) étant réglé de façon à être inférieur au diamètre de spot de la première lumière laser (L1).

8. Le procédé de soudage selon la revendication 7,
dans lequel un axe optique de la première lumière laser (L1) coïncide avec un axe optique de la deuxième lumière laser (L2).

9. Le procédé de soudage selon la revendication 8,
dans lequel une longueur d'onde de la deuxième lumière laser (L2) est réglée de façon à être dans une gamme allant de 780 nm à 1100 nm.

10. Le procédé de soudage selon la revendication 9,
dans lequel le diamètre de spot de la deuxième lumière laser (L2) est inférieur à 1/10 du diamètre de spot de la première lumière laser
ou dans lequel le diamètre de spot de la deuxième lumière laser (L2) est réglé de façon à être dans une gamme allant de 10 µm à 100 µm.

11. Le procédé de soudage selon l'une quelconque des revendications 7 à 10,
dans lequel la première lumière laser (L1) et la deuxième lumière laser (L2) sont mises en rotation à une vitesse de rotation qui est réglée de façon à être dans une gamme allant de 100 mm/s à 1000 mm/s.

12. Le procédé de soudage selon l'une quelconque des revendications 7 à 11,
dans lequel le temps d'irradiation avec la première lumière laser (L1) et la deuxième lumière laser (L2) est réglé de façon à être de 50 ms ou plus.

13. Le procédé de soudage selon l'une quelconque des revendications 1 à 12,
dans lequel chacun des premier et deuxième éléments (52) est un conducteur plat ayant une section transversale rectangulaire constituant une bobine de stator, et
dans lequel une bille fondue est formée sur la surface d'extrémité par soudage du premier élément (52) et du deuxième élément (52).

14. Le procédé de soudage selon l'une quelconque des revendications 7 à 13, comprenant en outre:
le fait de souffler de l'azote sur la surface d'extrémité du premier élément (52) et du deuxième élément (52) à un débit situé dans une gamme allant de 5 L/min à 100 L/min et selon un angle d'inclinaison situé dans une gamme allant de 0° à 90° par rapport à la surface d'extrémité,
le soufflage de l'azote étant commencé simultanément au début de la réalisation de l'irradiation rotationnelle de la première lumière laser (L1) et de la deuxième lumière laser (L2) ou est commencé avant le début de la réalisation de l'irradiation rotationnelle, et est terminé lorsque l'irradiation rotationnelle est terminée ou après la fin de l'irradiation rotationnelle.

15. Un dispositif laser (100) pour souder des parties d'extrémité d'un premier élément (52) et d'un deuxième élément (52) qui sont disposés l'un à côté de l'autre, le dispositif laser (100) comprenant:
un oscillateur (2) configuré pour faire osciller la lumière laser (L1);
un scanner (8) à courant galvanique, comprenant:
un miroir (81) à courant galvanique, d'axe X;
un moteur (82) à courant galvanique, d'axe X, configuré pour faire tourner le miroir (81) à courant galvanique d'axe X;
un miroir (83) à courant galvanique, d'axe Y;
un moteur (84) à courant galvanique, d'axe Y, configuré pour faire tourner le miroir (83) à courant galvanique d'axe Y,
le scanner (8) à courant galvanique déviant la lumière laser (L1) dans n'importe quelle direction bi-dimensionnelle;
**caractérisé en ce que** le dispositif laser comprend
une unité de commande configurée pour transmettre une instruction de commande au moteur (82) à courant galvanique, d' axe X, et au moteur (84) à courant galvanique d'axe Y de façon à effectuer une irradiation rotationnelle de la lumière laser (L1) vers une partie centrale d'une surface d'extrémité des parties d'extrémité du premier élément (52) et du deuxième élément (52) à un diamètre de rotation prédéterminé qui s'étend sur le premier élément (52) et le deuxième élément (52), le diamètre de rotation étant réglé de façon à être égal ou inférieur à un diamètre de spot de la lumière laser (L1).
